# EUROPEAN PATENT SPECIFICATION

(11) **EP 0 411 849 B1**
(45) Date of publication and mention of the grant of the patent: **25.08.1993**
(21) Application number: 90308310.3
(22) Date of filing: 30.07.1990
(51) Int. Cl.: G01C 19/56, G01P 9/04

(54) **Attitude sensor**
Richtungsfühler
Capteur d'attitude

(30) Priority: 29.07.1989 GB 8917223
(43) Date of publication of application: 06.02.1991
(73) Proprietor: BRITISH AEROSPACE PUBLIC LIMITED COMPANY, Farnborough, Hants. GU14 6YU (GB)
(72) Inventor: Varnham, Malcolm P., Stevenage, Herts SG1 2DA (GB); Hodgins, Diana, Stevenage, Herts SG1 2DA (GB); Norris, Timothy S., Stevenage, Herts SG1 2DA (GB); Thomas, Hugh D., Stevenage, Herts SG1 2DA (GB); Day, Charles, Stevenage, Herts SG1 2DA (GB)
(74) Representative: Dowler, Edward Charles

(56) References cited:
- EP-A- 0 153 189
- US-A- 4 079 630
- MARCONI REVIEW, vol. 45, no. 227, 1982, pages 231-249; R.M. LANGDON: "The vibrating cylinder gyro"

## Description

This invention relates to an attitude sensor, in particular a solid state attitude sensor.

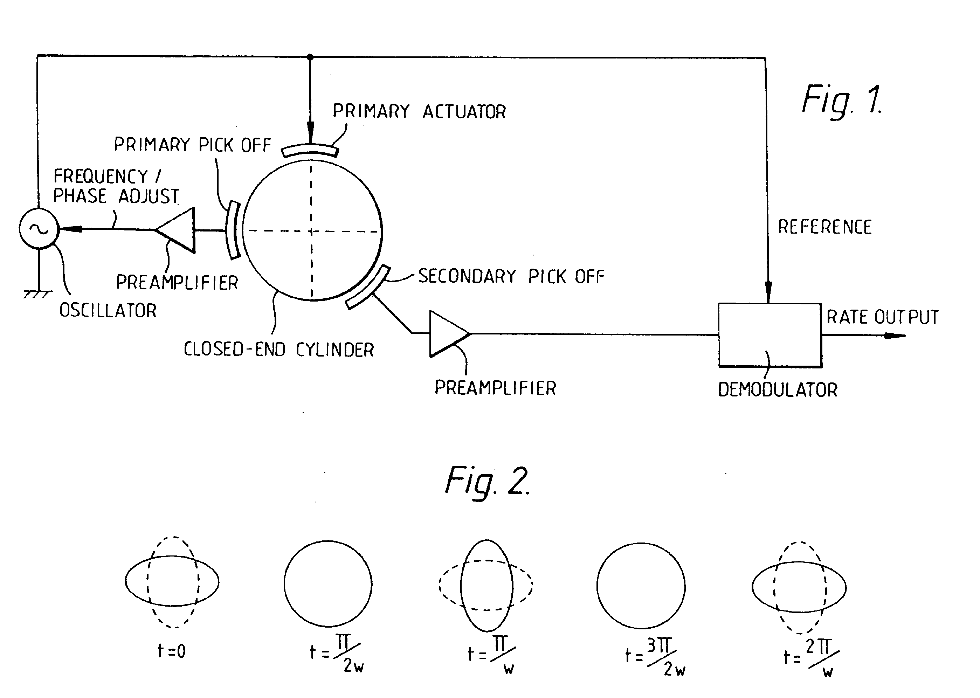

It is known to set a closed-end cylinder into vibration by applying an oscillatory signal to actuator(s) positioned appropriately around the side walls of the cylinder as is shown in Figure 1. For example, the (primary) mode that is excited has a radial amplitude dependence of cos2ϑcoswt (where w=the resonant of the cos2ϑ mode), that is, the mode vibrates as shown in Figure 2. In practice, it is generally necessary to derive a signal from the cylinder by means of an appropriate pick-off whose amplitude is dependant upon the amplitude of the mode. This signal can be fed back to the oscillator to adjust the oscillator output thus ensuring that the cylinder is maintained at the desired resonance.

When the cylinder is rotated about its axis, the direction of the vibrating mode lags behind the cylinder, by an amount that corresponds to the excitation of the (secondary) mode whose radial dependence is sin2ϑcoswt. The amplitude of this mode can be measured using appropriate pick-off(s). The resulting signal when demodulated with respect to the oscillator output, can be used as a measurement of the rotation rate that is applied to the cylinder.

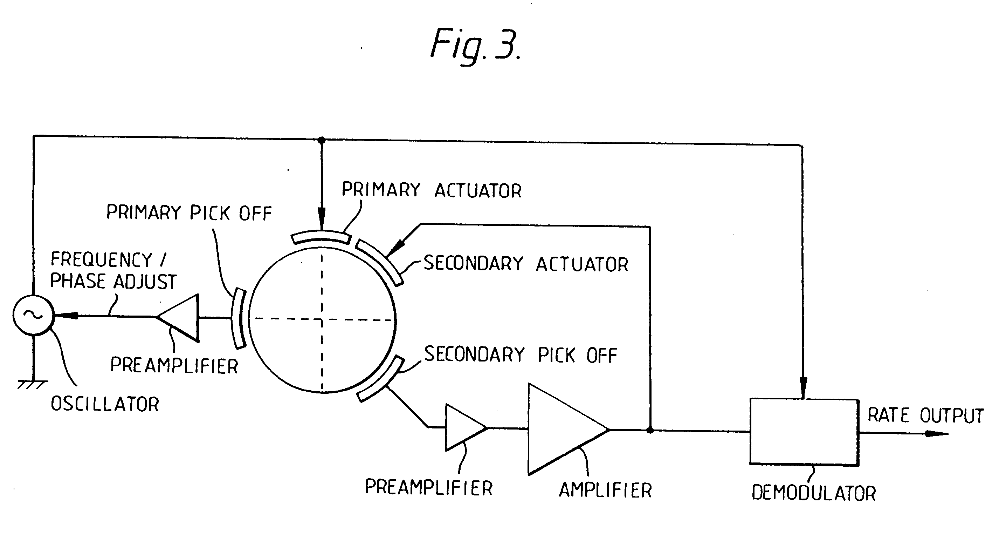

The pick-off signal which measures the amplitude of the sin 2ϑcoswt can also be used as shown in Figure 3. Here the signal is amplified and fed back to actuator(s) positioned appropriately to null the amplitude of the sin2ϑcoswt mode to approximately zero.

The amplitude of the signal fed back to the actuator is dependent upon the rotation rate applied and thus if the signal is demodulated with respect to the oscillator signal, then the output is a measurement of rate, which, in general, can be expected to be a more linear measurement of rate than that obtained without feedback.

It is known to construct the cylinder of various materials, such as fused silica, Beryllium-Copper, PZT etc. Vinous drive and pick-off mechanisms have been proposed including, for example, piezo-electric, magnetic, electrostatic, thermal or resistive thermal device. Other shaped resonators are known discs, open-ended cylinders, hemispheres, and other shells with azimuthal symmetry. Castellations have also been incorporated into some designs.

These designs all suffer from a common drawback, namely that the scale factor of the rate sensor is dependent upon the Q factor of the cylinder, the efficiency of the actuator, and the gain of the demodulators. Thus the scale factor is not constant as one would ideally require. Whilst feedback of the primary pick-off signal to the primary actuator can stabilise the amplitude of the primary mode, this solution does not eliminate the scale factor problem.

One reason why the scale factor accuracy problem is so important, can be understood by examining the following system. A rate sensor output is connected to an integrator whose output is the angle through which the cylinder is turned about its axis - ie, the system is a single-axis attitude sensor (or rate integrating gyroscope). If there is a 1% scale factor error, then the output will be in error by 3.6° for each revolution of the cylinder no matter how fast the cylinder is turned. This error will be additive to the other errors arising from drifts and nonlinearity.

A conventional solution to the scale factor problem would be to place the rate sensor on a rotating platform and to use the output of the rate sensor to drive a motor such that the cylinder does not rotate when the system is moved. This solution would work, but would not have the advantages in reliability and manufacturability offered by the solid-state solution proposed by this invention.

EP-A-O153189 discloses a solid state attitude sensor comprising several actuators coupled to a vibrating body for causing the body to resonate at a predetermined angle relative to the actuators. Pick-offs are provided for detecting the resonance of the body at second predetermined positions and producing a signal indicative thereof. Signal processing means determine the rate and attitude of the sensor from the signal. A simple feedback means is provided for varying said predetermined angle according to the attitude of a sensor. This simple arrangement, however, lacks accuracy as not all the properties of the sensor are taken into account during operation.

The present invention attempts to overcome the problems associated with the above mentioned arrangements by providing a solid state attitude sensor comprising:-
a resonator body;
two or more actuators coupled to the body at respective first predetermined positions for causing the body to resonate at a predetermined angle relative to said actuators;
pick-offs for detecting the resonance of the body at respective second predetermined positions and producing a signal indicative thereof;
signal processing means for determining the rate and attitude of the sensor from said signal; and
feedback means to vary the predetermined angle according to the attitude of the sensor characterised in that the feedback means is configured so as to maintain the orientation of the resonance at an angle K ϑ , where K is a constant dependent upon the shape of the body and the mode excited and ϑ is the angle of rotation of the body.

Preferably the sensor includes gain change means for scaling rate and attitude outputs from the sensor.

For simplicity, the body may comprise a cylinder.

Demodulation means may be provided for determining rate and changes in attitude of said sensor from said signal amplifying means for amplifying said demodulated signal and integrating means for regulating the actuators in accordance with the amplified demodulated signal.

Advantageously, reset means may be provided for re-setting the output of the integrating means to zero at time t=0 so as to excite the Cos2 ϑ Coswt mode of excitation.

In a particularly advantageous arrangement, the sensor includes a voltage controlled oscillator multiplying means for multiplying an output from the oscillator by Cos Φ and Sin Φ, feed means for feeding resulting signals to actuators positioned at approximately 45 degrees with respect to each other, pre-amplifier means for receiving a signal from each pick-off and for producing outputs, set multiplier means for receiving the outputs, each set multiplier being configured to multiply outputs by Cos Φ and Sin Φ respectively, phase detector means having a reference obtained from the output of the oscillator and being configured for receiving a signal comprising the addition of the outputs from the first set multiplier, filter means for filtering the output from the phase detector means and for directing said filtered output to oscillator for control thereof.

Alternatively, the solid state attitude sensor includes a voltage controlled oscillator, gain control to stabilise primary loop amplitude, multiplying means for multiplying an output from the oscillator by Tan Φ, feed means for feeding a resulting signal to one or other of actuators positioned at approximately 45 degrees with respect to each other, pre-amplifier means for receiving a signal from each pick-off and for producing outputs, set multiplier means for receiving the outputs, each set multiplier being configured to multiply outputs by Tan Φ, phase detector means having a reference obtained from the output of oscillator and being configured for receiving a signal comprising the addition of the outputs from set multiplier, filter means for filtering the output from the phase detector means and for directing said filtered output to oscillator for control thereof.

The sensor may also include a demodulator having a reference signal obtained from a phase shit which phase shifts the output of the oscillator so as to maximise the demodulator gain and being configured for receiving a signal comprising the addition of the outputs from the second set multiplier, said demodulator being further configured to produce an output for passing to an amplifier and integrator so as to produce rate and angle outputs.

In one arrangement, converter means are provided for converting the integrator output to Sin Φ and Cos Φ respectively prior to being fed back to said multipliers.

Alternatively the sensor may include converter means for converting the integrator output to Tan Φ prior to being fed back to said multipliers.
Figure 2 is a top view for showing the mode amplitude as a function of time of the cos 2ϑ cos at mode vibration of the figure 1 cylinder;
Figure 3 is a diagram of a known sensor with improved linearity;
Figure 4 is a simplified diagram of a single axis attitude sensor, according to the present invention;
Figure 5 is a diagram of a first preferred embodiment of the single axis attitude sensor according to the present invention; and
Figure 6 is a diagram of an alternative embodiment of an attitude sensor, according to the present invention.

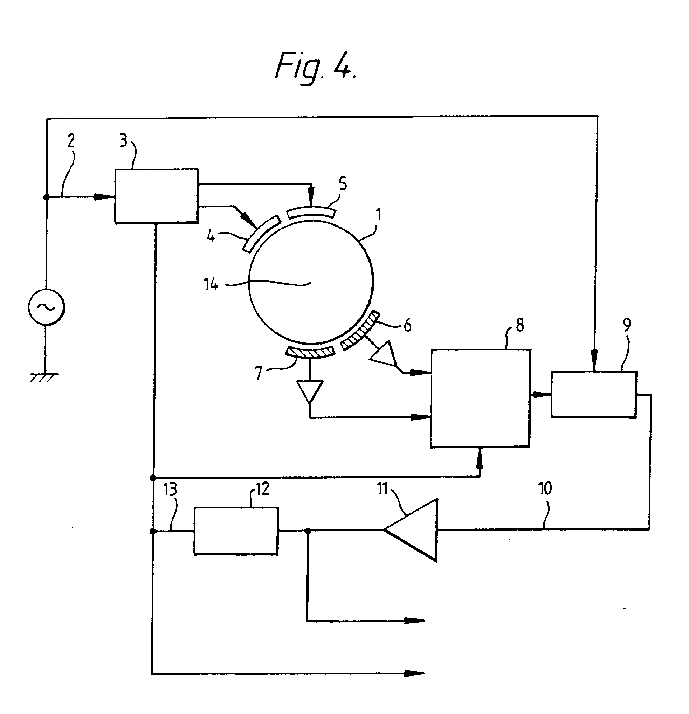

Referring to Figure 4, and by way of explanation, it will be assumed that the direction of the modes in an ideal cylinder remain fixed in inertial space when the cylinder is rotated.

Here an oscillating mode is set up in a resonating structure 1, by feeding an oscillator signal 2 through an actuator drive network 3 to two appropriately positioned actuators 4 and 5. The shape of the mode chosen must be such that rotation of the mode in the inertial frame about its axis can be detected by combining the outputs from at least two appropriately positioned pick-offs 6 and 7 in the pick-off receiver 8, and demodulating the signal with respect to the oscillator drive with demodulator 9. The output 10 of the demodulator is then amplified by amplifier 11 and integrated by the integrator 12. The output 13 of the integrator is fed back to the actuator drive and the pick-off receiver in such a way as to keep the output of the demodulator nulled to zero. In addition, the angle of the resonating mode (in an ideal system) is held constant when the resonating structure is rotated about its axis 14. In such a system, the output of the integrator is dependent upon the angle by which the resonating structure rotates about its axis, and the input to the integrator is dependent upon the rotation rate of the resonating structure about its axis. These outputs 13 and 15 respectively can be scaled and/or linearised as required. The type of linearisation required will be dependant upon the design of the actuator-drive network and pick-off receiver.

The feedback is arranged such that the oscillating mode maintains its spatial orientation when the resonating structure is rotated about its axis. It is this aspect to the invention which improves the scale factor accuracy of the rate output and reduces the errors in the angle output when the resonating structure is rotated about its axis. It should be noted that this principle holds for other modes of the structure and that these other modes may be adopted in appropriate circumstances.

This system, however, will not maintain the spatial orientation of the oscillating mode even for ideal cylinders. This is because even when the ideal cylinder (ie, symmetric and infinite Q (Q = Quality Function)) is rotated by an angle ϑ, the mode actually rotates by an angle Kϑ, where K is a constant of the order of typically around 0.3 to 0.8 and depends upon the shape of the mode that is excited in the structure. Thus the mode neither rotates with the cylinder, nor is left stationary in space.

The Figure 4 system will therefore maintain the spatial orientation of the mode aligned to the inertial angle Kϑ. This is because it is this angle that keeps the output of the demodulation nulled to zero. K is a function of the shape of the mode, which in turn is related to the shape of the cylinder. Although the shape of the cylinder might change with temperature, the effects can be easily compensated.

The system shown in figure 4 will therefore require a gain change in order to scale the rate and angle outputs and thus remove the K dependance.

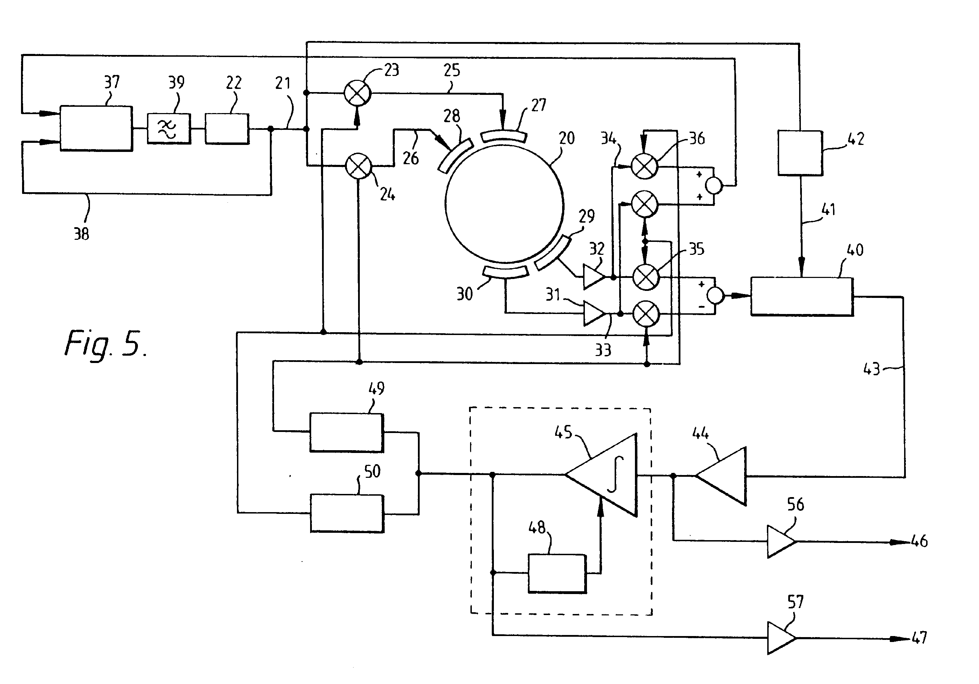

Referring to Figure 5 a closed-end cylinder 20 is operated as a single-axis attitude sensor (or rate integrating gyroscope). Feedback has been arranged such that if the output of the integrator Φ is reset at time t=0, then the cos2ϑcoswt mode is excited, where ϑ is in the inertial frame. This mode is excited irrespective of the rotation around the cylinder axis.

The system operates by multiplying the output, 21 from a voltage controlled oscillator (VCO) 22 by cos Φ, 23 and sin Φ, 24 respectively, and feeding the resulting signals 25 and 26 to two actuators 27 and 28 respectively placed at approximately 45° with respect to each other. The pick-off 29 and 30 are positioned diametrically opposite the actuators. The pick-off signals are amplified by two low noise pre-amplifiers 31 and 32 whose outputs 33 and 34 are connected to two sets multipliers 35 and 36. The top set multiplies the signals by cos Φ and sin Φ respectively, and the bottom set 36 multiplies the signals by cosΦ and sin Φ respectively. The signals from the top set are added together and used as the input to a phase detector 37 whose reference 38 is obtained from the output of the oscillator. The output of the phase detector is filtered, 39 and used as the control for the VCO. The phase detector, filter and VCO comprise a phase-locked loop whose purpose is to maintain the cylinder on resonance. The bottom set of multiplier outputs are also summed together and used as the input to a demodulator 40, whose reference signal 41 is obtained from a phase shift 42 which phase shifts the output of the VCO such that the demodulator gain is maximised. The demodulated output 43 is the passed through amplifier 44 and integrator 45 producing respectively rate output 46 and angle output 47 in a manner similar to that described above for the Figure 4 system. If the integrator output is reset to zero at time t=0, then if there were no feedback, the output of the demodulator would be zero until the cylinder is rotated.

With feedback, the output of the demodulator is amplified and integrated to yield the angle Φ. The integrator can be reset when Φ reaches modulo 2π by reset 48. If the integrator is implemented digitally then it can be made to reset automatically by means of an overflow. The integrator output is converted to sin Φ 49 and cos Φ 50 and it is these signals which are fed back to the multipliers 23, 24, 35 and 36. Rotation of the cylinder about its axis now causes an error signal to appear at the output of the demodulator which is amplified, integrated and fed back so as to maintain the mode direction aligned to Kϑ. Outputs can be obtained from both integrator output and input, which in this scheme are linearly proportional to the angle rotated about the cylinder axis and the rotation rate about the cylinder axis respectively.

The advantages offered by the invention is that the scale factor is controlled within the loop. Thus the scale factor should be extremely accurate. The implications of this are that the device would be suitable for use as a single-axis attitude sensor (or rate integrating gyroscope) whose angular output error after a given time interval would not be dependent upon the rate of rotation of the device. In addition, it provides a means for stabilising the scale factor accuracy of a single-axis rate sensor.

The system described by the invention would still drift in a similar way to known sensors. Standard means to null the drifts would therefore be required, although the nulling signal will be a function of the relative angle of the mode to the cylinder in the present invention.

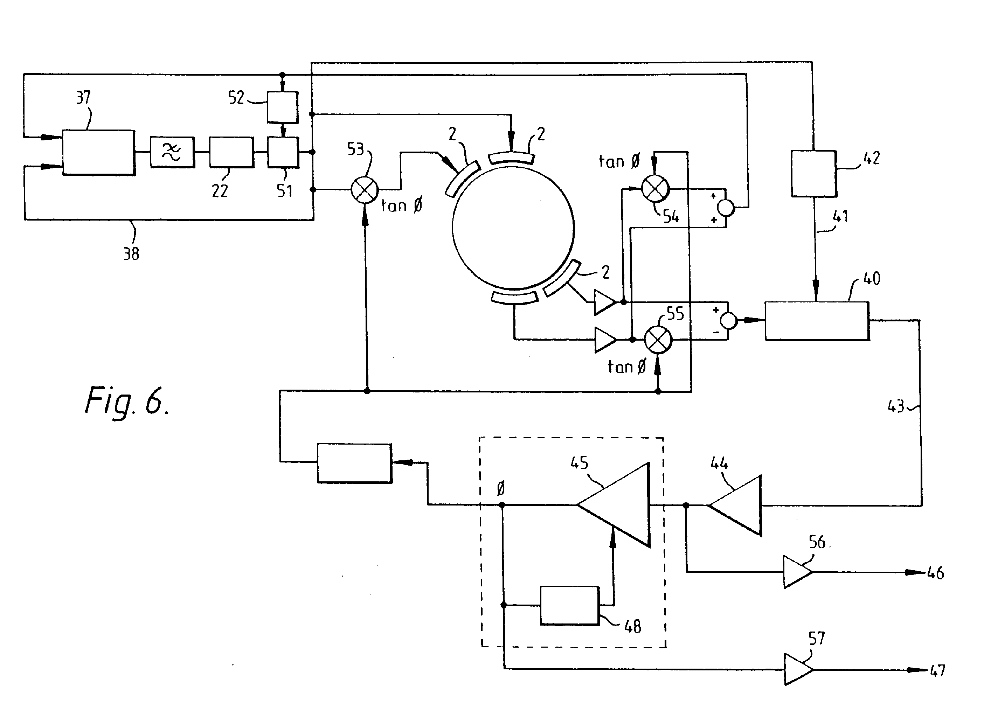

There are many variants of the above scheme which can provide simplifications in the electronics. One such scheme, is shown in Figure 6, in which like reference numbers relate to like components. The scheme incorporates a gain control 51 in the primary loop to stabilise the primary loop amplitude which is controlled by peak amplitude detector 52. This loop can be used to eliminate the COS resolvers and to replace the SIN resolvers with TAN multipliers 53, 54 and 55. This is because the gain control loop linearises the system. The effect is to halve the number of multipliers being used, and also to remove the necessity of having to derive two transcendental functions.

A further simplification is to incorporate switches (not shown) which switch over at 45° of the resolver angle. The advantage here is that the output no longer has to go to infinity.

The above simplification can be adapted for other functions (for example a simple multiplication by the angle ϑ) other than TAN provided that means are provided to linearise the angular output of the sensor.

The scale factor K may be set for the rate and angle outputs by amplifiers 55 and 56 respectively.

It should be noted that it would be possible to design an actuator drive network and pick-off receiver such that the direction of the oscillating mode was controlled, but where the mode changes shape, either as a function of time, or as a function of the relative angle of the mode to the case. This could be achieved, for example, by phase shifting one or more of the actuator signals, and by appropriate phase shifting in the pick-off receiver.

Similarly, it would be possible for a similar system to be designed such that the amplitude of the oscillating mode was varied either as a function of time, or as a function of the relative angle of the oscillating mode to the angle of the case.

It should also be noted that the integrator is not strictly necessary. Without the integrator, the amplifier output would be proportional to angle and this output could be differentiated if required to provide a rate output. Such a system, although not technically perfect, may have sufficient accuracy if the gain of the amplifier is high enough. Similarly, a more complicated compensation network could be used in place of the integrator.

It should further be noted that it has been assumed that the resonating structure is at, or near, resonance. This could be achieved, for example, by combining the pick-off signals and feeding back to the oscillator in an analogous way as is currently used in the Coriolis rate sensors to hold the structure at resonance.

The resonating structure could be a cylinder, a disk, a hemisphere, or any shell-like (or even solid) structure in which modes with a spatial azimuthal degeneracy (or in practice near degeneracy) can be set up. Note that the factor K is generally different for each of these structures. In addition, if the shape of the mode varies according to the relative angle of the mode to the cylinder, then the scaling factor K may be a function of this relative angle. If this were the case, then the scaling would be altered accordingly.

In practice there will be nonuniformities in the cylinder (or other resonators), which may or may not be deliberately incorporated into the structure. These nonuniformities will cause bias at the demodulator output. In such an event, it may be desirable to use estimation techniques (such as Kalman Filters) to model the system to provide first-order correction. In addition, or alternatively, it may be desirable to measure the bias as a function of resolver drive angle, with the gyroscope open loop, then to digitise this bias, and store it in a memory such that it can be subtracted during intended sensor operation.

The actuators and pick-offs can be piezo-electric, magnetic, electrostatic, thermal resistive, thermal or any other types which can excite the structure into the desired resonance and provide the desired pick-off signals. Thus many known rate sensors could be used as the sensing element in this new single-axis attitude sensor.

## Claims

1. A solid state attitude sensor comprising:-
a resonator body (20);
two or more actuators (27, 28) coupled to the body (20) at respective first predetermined positions for causing the body to resonate at a predetermined angle relative to said actuators (27, 28);
pick-offs (29, 30) for detecting the resonance of the body (20) at respective second predetermined positions and producing a signal indicative thereof;
signal processing means for determining the rate and attitude of the sensor from said signal; and
feedback means to vary the predetermined angle according to the attitude of the sensor characterised in that the feedback means is configured so as to maintain the orientation of the resonance at an angle Kϑ, where K is a constant dependent upon the shape of the body (20) and the mode excited and ϑ is the angle of rotation of the body (20)

2. A solid-state attitude sensor as claimed in claim 1 including gain change means for scaling rate and attitude outputs from the sensor.

3. A solid-state attitude sensor as claimed in claim 1 or claim 2 in which the body (20) comprises a cylinder or ring.

4. A solid-state attitude sensor as claimed in any one of claims 1 to 3 including demodulating means (9) for determining rate and changes in attitude of said sensor from said signal, amplifying means (11) for amplifying said demodulated signal, and integrating means (12) for regulating the actuators (4, 5) in accordance with the amplified demodulated signal.

5. A solid-state attitude sensor as claimed in claim 4 including re-set means for re-setting the output of the integrating means (12) to zero at time t=0 so as to excite the Cos2 ϑ Coswt mode of excitation.

6. A solid-state attitude sensor as claimed in claim 4 or claim 5 including a voltage controlled oscillator (22) multiplying means for multiplying an output (21) from the oscillator (22) by Cos Φ and Sin Φ (23,24), feed means for feeding resulting signals (25, 26) to actuators (27, 28) positioned at approximately 45 degrees with respect to each other, pre-amplifier means (31, 32) for receiving a signal from each pick-off (29, 30) and for producing outputs (33, 34), set multiplier means (35, 36) for receiving the outputs (33, 34), each set multiplier (35, 36) being configured to multiply the outputs (33, 34) by Cos Φ and Sin Φ respectively, phase detector means (37) having a reference (38) obtained from the output of the oscillator (22) and being configured for receiving a signal comprising the addition of the outputs from the first set multiplier (35), filter means (39) for filtering the output from the phase detector means (37) and for directing said filtered output to the oscillator (22) for control thereof.

7. A solid state attitude sensor as claimed as claimed in claim 4 or claim 5 including a voltage controlled oscillator (22), gain control (51) to stabilise primary loop amplitude, multiplying means (53) for multiplying an output from the oscillator (22) by Tan Φ, feed means for feeding a resulting signal to one or other of actuators (27, 38) positioned at approximately 45 degrees with respect to each other, pre-amplifier means (31, 32) for receiving a signal from each pick-off (29, 30) and for producing outputs (33, 34), set multiplier means (54, 55) for receiving the outputs (33, 34), each set multiplier (54, 55) being configured to multiply outputs (33, 34) by Tan Φ, phase detector means (37) having a reference (38) obtained from the output of the oscillator (22) and being configured for receiving a signal comprising the addition of the outputs from the set multiplier (54), filter means (39) for filtering the output from the phase detector means (37) and for directing said filtered output to the oscillator (22) for control thereof.

8. A solid state attitude sensor as claimed in claim 6 or 7 including a demodulator (40) having a reference signal (41) obtained from a phase shift (42) which phase shifts the output of the oscillator (22) so as to maximise the demodulator gain and being configured for receiving a signal comprising the addition of the outputs from the second set multiplier (36), said demodulator (40) being further configured to produce an output (43) for passing to an amplifier (44) and integrator (45) so as to produce rate (46) and angle (47) outputs.

9. A solid state attitude sensor as claimed in claim 6 including converter means (49 50) for converting the integrator output to Sin Φ and Cos Φ respectively prior to being fed back to said multipliers (23, 24, 35, 36).

10. A solid state attitude sensor as claimed in claim 7 including converter means (49, 50) for converting the integrator output to Tan Φ prior to being fed back to said multipliers (53, 54, 55).

## Patentansprüche

1. Festkörper-Lagesensor mit den folgenden Merkmalen:
- ein Resonatorkörper (20);
- zwei oder mehrere Antriebe (27, 28), die mit dem Körper (20) an jeweiligen ersten vorbestimmten Stellen gekoppelt sind, um den Körper zu veranlassen, bei einem vorbestimmten Winkel relativ zu den Antrieben (27, 28) in Resonanz zu fallen;
- Abnehmer (29, 30), um die Resonanz des Körpers (20) an jeweiligen zweiten vorbestimmten Stellen festzustellen und um ein Signal zu liefern, das dies anzeigt;
- eine Signalverarbeitungsstufe zur Bestimmung von Geschwindigkeit und Lage des Sensors von dem Signal; und
- eine Rückkopplung, um den vorbestimmten Winkel gemäß der Lage des Sensors zu ändern,
dadurch gekennzeichnet, daß die Rückkopplung so ausgebildet ist, daß die Lage der Resonanz unter einem Winkel Kϑ aufrechterhalten wird, wobei K eine Konstante ist, die von der Gestalt des Körpers und dem erregten Modus abhängt, und wobei ϑ der Drehwinkel des Körpers (20) ist.

2. Festkörper-Lagesensor nach Anspruch 1, mit einer Verstärkungsänderungseinrichtung zur Skalierung der Geschwindigkeits- und Lageausgänge vom Sensor.

3. Festkörper-Lagesensor nach Anspruch 1 oder 2, bei welchem der Körper (20) aus einem Zylinder oder einem Ring besteht.

4. Festkörper-Lagesensor nach einem der Ansprüche 1 bis 3, mit Demodulationsmitteln (9) zur Bestimmung von Geschwindigkeit und Änderungen in der Lage des Sensors vom Signal und mit Verstärkungsmitteln (11) zur Verstärkung des demodulierten Signals, und mit einem Integrator (12) zur Einstellung der Antriebe (4, 5) gemäß dem verstärkten demodulierten Signal.

5. Festkörper-Lagesensor nach Anspruch 4, mit Rückstellmitteln zum Zurückstellen des Ausgangs des Integrators (12) auf Null zur Zeit t = 0, so daß der cos2ϑcoswt-Modus der Erregung erregt wird.

6. Festkörper-Lagesensor nach den Ansprüchen 4 oder 5, mit einem spannungsgesteuerten Oszillator (22), mit einer Multipliziereinrichtung zur Multiplikation eines Ausgangs (21) vom Oszillator (22) mit dem cos Φ und dem sin Φ (23, 24), mit Mitteln zur Zuführung der resultierenden Signale (25, 26) nach Antrieben (27, 28), die unter etwa 45 ° zueinander positioniert sind, mit einer Verstärkereinrichtung (31, 32), die ein Signal von jedem Abnehmer (29, 30) erhält und Ausgänge (33, 34) erzeugt, mit einer Multipliziereinrichtung (35, 36), der die Ausgänge (33, 34) zugeführt werden, wobei jede Multiplizierstufe (35, 36) so ausgebildet ist, daß die Ausgänge (33, 34) mit cos Φ bzw. sin Φ multipliziert werden, mit einem Phasendetektor (37), der einen Bezugswert (38) vom Ausgang des Oszillators (22) erhält und so ausgebildet ist, daß er ein Signal empfängt, welches die Summe der Ausgänge von erster Multiplizierstufe (35) ist, mit einer Filtereinrichtung (39) zum Filtern des Ausgangs des Phasendetektors (37) und um den gefilterten Ausgang dem Oszillator (22) zu dessen Steuerung zuzuführen.

7. Festkörper-Lagesensor nach einem der Ansprüche 4 öder 5, mit einem spannungsgesteuerten Oszillator (22), mit einer Verstärkungssteuereinrichtung (51) zur Stabilisierung der Primärschleifenamplitude, mit einer Multipliziereinrichtung (53) zur Multiplikation eines Ausgangs vom Oszillator (22) mit tan Φ, mit einer Zuführungseinrichtung, die ein resultierendes Signal dem einen oder anderen der Antriebe (27, 28) zuführt, die um etwa 45 ° relativ zueinander versetzt sind, mit einem Vorverstärker (31, 32), der ein Signal von jedem Abnehmer (29, 30) erhält und Ausgänge (33, 34) erzeugt, mit Multipliziergruppen (54, 55), die Ausgänge (33, 34) empfangen, wobei jede Multipliziergruppe (54, 55) so ausgebildet ist, daß die Ausgänge (33, 34) mit tan Φ multipliziert werden, mit einem Phasendetektor (37), der einen Bezugswert (38) aufweist, welcher vom Ausgang des Oszillators (22) geliefert wird, und so ausgebildet ist, daß ein Signal empfangen wird, welches die Summe der Ausgänge der Multipliziergruppe (54) darstellt, mit einer Filtereinrichtung (39) zum Filtern des Ausgangs des Phasendetektors (37) und um den gefilterten Ausgang dem Oszillator (22) zuzuführen, um diesen zu steuern.

8. Festkörper-Lagesensor nach den Ansprüchen 6 oder 7, mit einem Demodulator (40), der ein Bezugssignal (41) hat, welches aus einer Phasenverschiebung (42) erlangt wird, die den Ausgang des Oszillators (22) derart verschiebt, daß die Demodulatorverstärkung maximiert wird, wobei die Anordnung derart getroffen ist, daß ein Signal empfangen wird, welches die Summe der Ausgänge der zweiten Multipliziergruppe (36) darstellt, und wobei der Demodulator (40) so ausgebildet ist, daß ein Ausgang (43) erzeugt wird, der einem Verstärker (44) und einem Integrator (45) zugeführt wird, um einen Geschwindigkeitsausgang (46) und einen Winkelausgang (47) zu erzeugen.

9. Festkörper-Lagesensor nach Anspruch 6, mit einem Konverter (49, 50), der den Integratorausgang in sin Φ bzw. cos Φ umwandelt, bevor der Ausgang den Multiplizierstufen (23, 24, 35, 36) zugeführt wird.

10. Festkörper-Lagesensor nach Anspruch 7, mit einem Konverter (49, 50), der den Integratorausgang in tan Φ umwandelt, bevor dieser nach den Multiplizierstufen (53, 54, 55) zurückgeführt wird.

## Revendications

1. Détecteur d'orientation à semi-conducteurs, comprenant :
- un corps de résonateur (20);
- deux actionneurs ou plus (27, 28) couplés au corps (20) à de premières positions prédéterminées respectives pour amener le corps à résonner à un angle prédéterminé par rapport auxdits actionneurs (27, 28);
- des capteurs (29, 30) pour détecter la résonance du corps (20) à de secondes positions prédéterminées respectives et produire un signal représentatif de celle-ci;
- des moyens de traitement de signal pour déterminer la vitesse et l'orientation du détecteur à partir dudit signal; et
- un moyen de réaction pour faire varier l'angle prédéterminé en fonction de l'orientation du détecteur, caractérisé en ce que le moyen de réaction a une configuration qui permet de maintenir l'orientation de la résonance à un angle Kϑ, où K est une constante dépendant de la forme du corps (20) et du mode excité et ϑ est l'angle de rotation du corps (20).

2. Détecteur d'orientation à semi-conducteurs selon la revendication 1, comprenant un moyen de changement du gain pour mettre à l'échelle les sorties du détecteur en vitesse et orientation.

3. Détecteur d'orientation à semi-conducteurs selon la revendication 1 ou la revendication 2, dans lequel le corps (20) comprend un cylindre ou un anneau.

4. Détecteur d'orientation à semi-conducteurs selon l'une quelconque des revendications 1 à 3, comprenant un moyen de démodulation (9) pour déterminer la vitesse et des changements de l'orientation dudit détecteur à partir dudit signal, un moyen d'amplification (11) pour amplifier ledit signal démodulé, et un moyen d'intégration (12) pour réguler les actionneurs (4, 5) en conformité avec le signal démodulé, amplifié.

5. Détecteur d'orientation à semi-conducteurs selon la revendication 4, comprenant un moyen de remise à zéro afin de remettre à zéro la sortie du moyen d'intégration (12) à un instant t=O afin d'exciter le mode Cos2 ϑ Coswt de l'excitation.

6. Détecteur d'orientation à semi-conducteurs selon la revendication 4 ou la revendication 5, comportant un oscillateur piloté par tension (22), un moyen de multiplication pour multiplier une sortie (21) de l'oscillateur (22) par Cos φ et sin φ (23, 24), un moyen d'application pour appliquer des signaux résultants (25, 26) à des actionneurs (27, 28) placés approximativement à 45 degrés l'un par rapport à l'autre, un moyen de préamplificateur (31, 32) pour recevoir un signal en provenance de chaque capteur (29, 30) et produire des sorties (33, 34), des moyens de multiplicateur à jeux (35, 36) pour recevoir les sorties (33, 34), chaque multiplicateur d'un jeu (35, 36) ayant une configuration permettant de multiplier les sorties (33, 34) par Cos φ et sin φ, respectivement, un moyen de détecteur de phase (37) ayant une référence (38) obtenue à partir de la sortie de l'oscillateur (22) et ayant une configuration pour recevoir un signal comprenant l'addition des sorties du multiplicateur du premier jeu (35), un moyen de filtre (39) pour filtrer la sortie du moyen de détecteur de phase (37) et pour diriger ladite sortie filtrée vers l'oscillateur (22) pour le pilotage de ce dernier.

7. Détecteur d'orientation à semi-conducteurs selon la revendication 4 ou la revendication 5, comprenant un oscillateur piloté par tension (22), une commande de gain (51) pour stabiliser l'amplitude d'une boucle primaire, un moyen de multiplication (53) pour multiplier une sortie de l'oscillateur (22) par Tg φ, un moyen d'application pour appliquer un signal résultant à l'un ou à l'autre actionneur (27, 38) placés approximativement à 45 degrés l'un par rapport à l'autre, un moyen de pré-amplificateur (31, 32) pour recevoir un signal provenant de chaque capteur (29, 30) et pour produire des sorties (33, 34), un moyen de multiplicateur à jeux (54, 55) pour recevoir les sorties (33, 34), chaque multiplicateur d'un jeu (54, 55) ayant une configuration permettant de multiplier des sorties (33, 34) par Tg φ, un moyen de détecteur de phase (37) ayant une référence (38) obtenue à partir de la sortie de l'oscillateur (22) et ayant une configuration permettant de recevoir un signal comprenant l'addition des sorties du multiplicateur à jeux (54), un moyen de filtre (39) pour filtrer la sortie du moyen de détecteur de phase (37) et pour diriger ladite sortie filtrée vers l'oscillateur (22) pour son pilotage.

8. Détecteur d'orientation à semi-conducteurs selon la revendication 6 ou 7, comprenant un démodulateur (40) ayant un signal de référence (41) obtenu à partir d'un décalage de phase (42), lequel décale en phase la sortie de l'oscillateur (22) de manière à rendre maximal le gain du démodulateur et ayant une configuration permettant de recevoir un signal comprenant l'addition des sorties du multiplicateur du second jeu (36), ladite démodulation (40) étant en outre configurée pour produire une sortie (43) pour passage à un amplificateur (44) et à un intégrateur (45) de manière à produire des sorties en vitesse (46) et angle (47).

9. Détecteur d'orientation à semi-conducteurs selon la revendication 6 comprenant un moyen de convertisseur (49, 50) pour convertir la sortie de l'intégrateur en sin φ et cos φ, respectivement, avant son renvoi auxdits multiplicateurs (23, 24, 35, 36).

10. Détecteur d'orientation à semi-conducteurs selon la revendication 7, comprenant un moyen de convertisseur (49, 50) pour convertir la sortie de l'intégrateur en Tg φ avant son renvoi auxdits multiplicateurs (53, 54,55).
